# EUROPEAN PATENT APPLICATION

(11) **EP 3 829 095 A1**
(43) Date of publication of application: **02.06.2021**
(21) Application number: 19840559.9
(22) Date of filing: 17.07.2019
(51) Int. Cl.: H04L 5/00

(54) **RANDOM ACCESS METHOD AND RELATED DEVICE**

(30) Priority: 26.07.2018 CN 201810837103
(71) Applicant: VIVO MOBILE COMMUNICATION CO., LTD., Dongguan, Guangdong 523860 (CN)
(72) Inventor: WU, Yumin, Dongguan, Guangdong 523860 (CN); MA, Yue, Dongguan, Guangdong 523860 (CN)
(74) Representative: Lavoix
(86) International application number: PCT/CN2019/096328
(87) International publication number: WO 2020/020030

(57) **Abstract**

This disclosure provides a random access method and a related device. The method includes: transmitting a data payload in Msgl to a network-side device based on transmission configuration information of the Msg1.

## Description

### CROSS-REFERENCE TO RELATED APPLICATIONS

This application claims priority to Chinese Patent Application No. 201810837103.1, filed in China on July 26, 2018, which is incorporated herein by reference in its entirety.

### TECHNICAL FIELD

This disclosure relates to the field of communications technologies, and in particular, to a random access method and a related device.

### BACKGROUND

With the continuous development of mobile communications technologies, a simplified random access procedure is generated, such as a two-step random access (that is, 2-Step RACH) procedure. Currently, Msgl in two-step random access can not only include a control payload (for example, a preamble), but also a data payload (for example, a radio resource control message). However, amongst the related techniques, there is no related solution on the transmission of Msgl in the two-step random access procedure.

### SUMMARY

Embodiments of this disclosure provide a random access method and a related device, to provide an Msgl transmission mode in a two-step random access procedure and provide a solution on Msgl transmission in the two-step random access procedure.

To resolve the foregoing technical problem, this disclosure is implemented as follows:

According to a first aspect, an embodiment of this disclosure provides a random access method. The method includes:
transmitting a data payload in Msgl to a network device based on transmission configuration information of the Msgl.

According to a second aspect, an embodiment of this disclosure further provides a random access method. The method includes:
receiving a data payload of Msgl sent in a HARQ manner by a terminal device; and
decoding the received data payload of the Msgl.

According to a third aspect, an embodiment of this disclosure further provides a terminal device. The terminal device includes:
a transmission module, configured to transmit a data payload in Msgl to a network-side device based on transmission configuration information of the Msgl.

According to a fourth aspect, an embodiment of this disclosure further provides a network-side device. The network-side device includes:
a receiving module, configured to receive a data payload of Msgl sent in a HARQ manner by a terminal device; and
a decoding module, configured to decode the received data payload of the Msgl.

According to a fifth aspect, an embodiment of this disclosure further provides a terminal device, including a processor, a memory, and a computer program stored in the memory and capable of running on the processor, where when the computer program is executed by the processor, the steps of the random access method according to the first aspect are implemented.

According to a sixth aspect, an embodiment of this disclosure further provides a network-side device, including a processor, a memory, and a computer program stored in the memory and capable of running on the processor, where when the computer program is executed by the processor, the steps of the random access method according to the second aspect are implemented.

According to a seventh aspect, an embodiment of this disclosure further provides a computer-readable storage medium, where the computer-readable storage medium stores a computer program, and when the computer program is executed by a processor, the steps of the random access method according to the first aspect are implemented, or the steps of the random access method according to the second aspect are implemented.

In this embodiment of this disclosure, the data payload in the Msgl is transmitted to the network-side device based on the transmission configuration information of the Msgl, so as to transmit the data payload in the Msgl in the two-step random access procedure, thereby standardizing an Msgl transmission mode in the two-step random access procedure and providing a solution on Msgl transmission in the two-step random access procedure.

### BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings in the following description show merely some embodiments of this disclosure, and a person of ordinary skill in the art may derive other drawings from these accompanying drawings without creative efforts.
FIG. 1 is a flowchart of a two-step random access method according to an embodiment of this disclosure;
FIG 2 is a schematic structural diagram to which an embodiment of this disclosure is applicable;
FIG. 3 is a flowchart of a random access method according to an embodiment of this disclosure;
FIG. 4 is a flowchart of another random access method according to an embodiment of this disclosure;
FIG. 5 is a structural diagram of a terminal device according to an embodiment of this disclosure;
FIG 6 is a structural diagram of a network-side device according to an embodiment of this disclosure;
FIG 7 is a structural diagram of another terminal device according to an embodiment of this disclosure; and
FIG 8 is a structural diagram of another network-side device according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are merely a part rather than all of the embodiments of this disclosure. All other embodiments that a person of ordinary skill in the art obtains without creative efforts based on the embodiments of this disclosure shall fall within the protection scope of this disclosure.

The terms "first", "second", and the like in this specification and claims of this application are used to distinguish between similar objects instead of describing a specific order or sequence. It should be understood that the data termed in such a manner are interchangeable in proper cases so that the embodiments of this application can be implemented in other orders than the order illustrated or described in this application. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device. In addition, "and/or" used in this specification and claims indicates at least one of the connected objects. For example, "A and/or B and/or C" represents the following seven cases: only A; only B; only C; both A and B; both B and C; both A and C; and all A, B, and C.

For simple understanding, the following describes two-step random access.

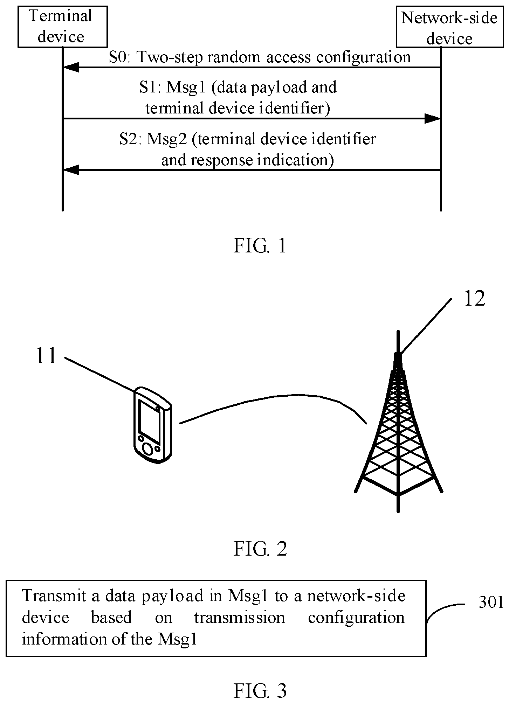

For example, referring to FIG. 1, the two-step random access procedure may include the following steps:

Step S0: A network-side device configures the configuration information of two-step random access for a terminal device, where the configuration information can include resource information for Msgl transmission and resource information for Msg2 reception.

Step S1: The terminal device sends, to the network-side device, Msgl that includes a data payload (that is, Data) and a terminal device identifier (that is, UE ID).

In this step, the terminal device initiates the two-step random access (that is, 2-Step RACH) procedure and sends request message (that is, the Msgl that includes the data payload and the terminal device identifier) to the network-side device.

Step S2: The network-side device sends, to the terminal device, Msg2 that contains confirmation information.

In this step, the confirmation information may include a terminal device identifier (that is, a UE ID) and a response indication (that is, an ACK Indication).

Referring to FIG. 2, FIG. 2 is a schematic structural diagram of a network to which an embodiment of this disclosure is applicable. As shown in FIG. 2, the network structure includes a terminal device 11 and a network-side device 12. The terminal device 11 may be a terminal device-side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), or a wearable device (Wearable Device). It should be noted that a specific type of the terminal device 11 is not limited in this embodiment of this disclosure. The network-side device 12 may be a base station, such as a macro base station, an LTE eNB, a 5G NR NB or gNB. The network-side device 12 may alternatively be a small station such as a low power node (Low Power Node, LPN) pico or femto, or the network-side device 12 may be an access point (Access Point, AP). The base station may alternatively be a network node including a central unit (Central Unit, CU) and a plurality of transmission reception points (Transmission Reception Point, TRP) managed and controlled by the central unit. It should be noted that a specific type of the network-side device 12 is not limited in this embodiment of this disclosure.

In this embodiment of this disclosure, the network-side device 12 may configure resource configuration information of a two-step random access (that is, 2-Step RACH) procedure for the terminal device 11. The resource configuration information may include at least one of Msgl transmission resource configuration information and Msg2 receiving resource configuration information.

After initiating the two-step random access (that is, 2-Step RACH) procedure, the terminal device 11 may store a to-be-sent data payload (that is, the data payload of the Msg1, for example, an RRC message) in a target cache, waiting for transmission. The target cache may include a specified cache (for example, an Msgl cache), a HARQ cache, or the like for storing the data payload of the Msgl.

In this embodiment of this disclosure, the terminal device 11 may transmit the data payload of the Msgl to the network-side device based on the transmission configuration information of the Msgl. The transmission configuration information may indicate a transmission mode of the data payload of the Msgl. For example, if the transmission configuration information includes HARQ (Hybrid Automatic Repeat Request, hybrid automatic repeat request) configuration information for transmitting the data payload in the Msgl, the transmission configuration information indicates transmitting the data payload in the Msgl via the HARQ manner. Otherwise, it indicates transmitting the data payload in the Msgl without using the HARQ manner. It should be noted that the HARQ configuration information may be pre-defined by the protocol or configured on a network side, which is not limited in this embodiment of this disclosure.

In one implementation, if the transmission configuration information indicates to use the HARQ manner to transmit the data payload in the Msgl, the terminal device 11 uses the HARQ manner to transmit the data payload in the Msgl to the network-side device 12, to improve a success rate of transmitting the data payload in the Msgl.

In another implementation, if the transmission configuration information indicates transmitting the data payload in the Msgl without using the HARQ manner, the terminal device 11 may directly transmit the data payload in the Msgl to the network-side device 12, for example, transmitting a data payload in the Msgl without HARQ coding, to improve efficiency of transmitting the data payload in the Msgl.

In this embodiment of this disclosure, the terminal device 11 may also retransmit the data payload in the Msgl to the network-side device 12 based on the transmission configuration information of the Msgl, for example, when a condition of retransmission is satisfied, retransmitting the data payload in the Msgl to the network-side device based on the transmission configuration information of the Msgl.

Optionally, it may be determined, based on an Msg2 receiving result, whether the condition of retransmission is satisfied, or determined, based on indication information carried in the received Msg2, whether the condition of retransmission is satisfied.

In one implementation, if the HARQ configuration information for transmitting the data payload in the Msgl is configured, the retransmitting the data payload in the Msgl to the network-side device 12 may be retransmitting the data payload in the Msgl to the network-side device 12 by using first HARQ process data, where the first HARQ process data is the same as the HARQ process data of the data payload in the Msgl, which is transmitted at the first or previous transmission; or may be retransmitting the data payload in the Msgl to the network-side device 12 by using second HARQ process data, where the second HARQ process data is newly generated HARQ process data. It should be noted that the HARQ process data may include a size of a transmission block.

In another implementation, if the HARQ configuration information for transmitting the data payload in the Msgl is not configured, the data payload in the Msgl may be read from the Msgl cache or other dedicated caches for storing the data payload in the Msgl, and a data payload that is not HARQ-coded in the Msgl is retransmitted to the network-side device 12.

In this embodiment of this disclosure, the network-side device 12 receives and decodes the data payload in the Msgl sent by the terminal device 11. Optionally, when the network-side device 12 identifies, in the received Msgl, at least two Msgl corresponding to a same data payload, data payloads of the at least two Msgl may be combined and decoded, so as to improve a success rate of decoding the data payload in the Msgl.

In this embodiment of this disclosure, the network-side device 12 may also transmit the Msg2 to the terminal device 11, where the Msg2 may include at least one of the following: Msgl identification information, resource information for Msgl retransmission, Msgl retransmission waiting time information, an association of the resource information for Msgl retransmission and the terminal device, and an association of the waiting time information for Msgl retransmission and the terminal device.

Correspondingly, the terminal device 11 may retransmit the data payload in the Msgl based on a resource indicated by the resource information for Msgl retransmission, so as to reduce a repetition collision and improve a success rate of Msgl retransmission.

It should be noted that the Msg2 may be sent to a plurality of terminal devices. Therefore, the Msg2 includes the association of the resource information for Msgl retransmission and the terminal device and the association of the waiting time information for Msgl retransmission and the terminal device, so that a terminal device that receives the Msg2 can rapidly obtain the Msgl retransmission waiting time information and the resource information for Msgl retransmission corresponding to the terminal device.

According to the random access method in this embodiment of this disclosure, the terminal device 11 transmits the data payload (for example, an RRC message) in the Msgl to the network-side device 12 based on the transmission configuration information of the Msgl, so as to transmit the data payload in the Msgl in the two-step random access procedure, thereby standardizing an Msgl transmission mode in the two-step random access procedure and providing a solution on Msgl transmission in the two-step random access procedure.

An embodiment of this disclosure provides a random access method, applied to a terminal device. Referring to FIG. 3, FIG. 3 is a flowchart of a random access method according to an embodiment of this disclosure. As shown in FIG. 3, the following steps are included.

Step 301: Transmit a data payload in Msgl to a network-side device based on transmission configuration information of the Msg1.

In this embodiment of this disclosure, the transmission configuration information may indicate a transmission mode of the data payload in the Msg1. For example, if the transmission configuration information includes HARQ configuration information for transmitting the data payload in the Msgl, the transmission configuration information indicates transmitting the data payload in the Msgl via the HARQ manner. Otherwise, it indicates transmitting the data payload in the Msgl without using the HARQ manner. Alternatively, in a case in which the transmission configuration information includes a first identifier for indicating the transmission mode of the data payload in the Msgl, if a value of the first identifier is a first value, the transmission configuration information indicates to use the HARQ manner to transmit the data payload in the Msgl; and if the value of the first identifier is a second value, the transmission configuration information indicates transmitting the data payload in the Msgl without using the HARQ manner. It can be understood that the Msgl transmission configuration information may further indicate a transmission mode other than the HARQ manner, which is not limited in this embodiment of this disclosure.

In this embodiment of this disclosure, the Msgl may include only a data payload (for example, an RRC message) or include both a data payload and a control payload (for example, a preamble). In addition, the data payload and the control payload of the Msgl may be transmitted through a same channel or different channels, which is not limited in this embodiment of this disclosure.

In an actual application, after initiating the two-step random access (that is, 2-Step RACH) procedure, the terminal device 11 may store a to-be-sent data payload (for example, an RRC message) in a target cache, waiting for transmission. The target cache may include a specified cache (for example, an Msgl cache), a HARQ cache, or the like for storing the data payload of the Msg1. When it is determined that the data payload in the Msgl needs to be sent, the data payload in the Msgl may be obtained from the target cache and the data payload in the Msgl may be transmitted to the network-side device based on the transmission configuration information of the Msg1.

It can be understood that when the Msgl transmission resource configuration information is configured on a network side, the data payload in the Msgl may be transmitted to the network-side device based on a resource indicated by the Msgl transmission resource configuration information, and when the Msgl transmission resource configuration information is not configured on a network side, a resource pre-defined by the protocol may be used to transmit the data payload in the Msgl to the network-side device.

It should be noted that the data payload in the Msgl transmitted to the network-side device may be the data payload in the Msgl that is transmitted to the network-side device firstly or the data payload in the Msgl that is retransmitted to the network-side device.

According to the random access method in this embodiment of this disclosure, the data payload in the Msgl is transmitted to the network-side device based on the transmission configuration information of the Msgl, so as to transmit the data payload in the Msgl in the two-step random access procedure, thereby standardizing an Msgl transmission mode in the two-step random access procedure and providing a solution on Msgl transmission in the two-step random access procedure.

Optionally, the foregoing step 301 of transmitting a data payload in Msgl to a network-side device based on transmission configuration information of the Msgl may include:
when the transmission configuration information indicates transmitting the data payload in the Msgl via the HARQ manner, transmitting the data payload in the Msgl to the network-side device via the HARQ manner.

In another implementation, when the transmission configuration information includes HARQ configuration information for transmitting the data payload in the Msgl, it may be determined that the transmission configuration information indicates to use the HARQ manner to transmit the data payload in the Msgl, and the HARQ manner is used to transmit the data payload in the Msgl to the network-side device.

In another implementation, it may be determined, based on the value of the first identifier included in the transmission configuration information, whether to use the HARQ manner to transmit the data payload in the Msg1. For example, when the value of the first identifier is the first value, it may be determined that the transmission configuration information indicates transmitting the data payload in the Msgl via the HARQ manner, and the HARQ manner is used to transmit the data payload in the Msgl to the network-side device.

It should be noted that the HARQ configuration information may be pre-defined by the protocol or configured on the network side, which is not limited in this embodiment of this disclosure.

Optionally, the HARQ configuration information used for transmitting the data payload in the Msgl includes at least one of the following: a HARQ process identifier; and a HARQ redundancy version identifier.

In this embodiment of this disclosure, the HARQ process identifier is used to uniquely identify a HARQ process, for example, HARQ Process ID 0. Optionally, the terminal device may share one of HARQ processes for transmitting other uplink data to transmit the data payload in the Msgl or may use a HARQ process other than those for transmitting other uplink data to transmit the data payload in the Msg1. The HARQ redundancy version identifier can also be known as a redundancy version identifier. For example, the HARQ redundancy version identifier is RV0 during the first transmission, the HARQ redundancy version identifier is RV1 during retransmission, or during retransmission, the HARQ redundancy version identifier is a HARQ redundancy version identifier (for example, RV1) indicated in the Msg2.

In this embodiment of this disclosure, when the transmission configuration information indicates to use the HARQ manner to transmit the data payload in the Msgl, the HARQ manner is used to transmit the data payload in the Msgl to the network-side device, thereby improving a success rate of transmitting the data payload in the Msg1.

Optionally, the foregoing step 301 of transmitting a data payload in Msgl to a network-side device based on transmission configuration information of the Msgl may include:
when the transmission configuration information indicates transmitting the data payload in the Msgl without using the HARQ manner, transmitting a data payload in the Msgl to the network-side device without HARQ coding.

In one implementation, when the transmission configuration information does not include the HARQ configuration information for the data payload in the Msgl, that is, when there is no HARQ configuration information for the data payload in the Msgl, it may be determined that the transmission configuration information indicates transmitting the data payload in the Msgl without using the HARQ manner. In this case, the data payload that is not HARQ-coded in the Msgl is transmitted to the network-side device, that is, the data payload in the Msgl is not transmitted in the HARQ manner.

In another implementation, it may be determined, based on the value of the first identifier included in the transmission configuration information, whether to use the HARQ manner to transmit the data payload in the Msg1. For example, when the value of the first identifier is the second value, it may be determined that the transmission configuration information indicates transmitting the data payload in the Msgl without using the HARQ manner, and in this case, the data payload that is not HARQ-coded in the Msgl is transmitted to the network-side device, that is, the data payload in the Msgl is not transmitted in the HARQ manner.

In this embodiment of this disclosure, when the transmission configuration information indicates transmitting the data payload in the Msgl without using the HARQ manner, transmitting the data payload that is not HARQ coded in the Msgl to the network-side device can improve efficiency of transmitting the data payload in the Msg1.

Optionally, the transmitting a data payload in Msgl to a network-side device is retransmitting the data payload in the Msgl to the network-side device.

In this embodiment of this disclosure, the data payload in the Msgl may be retransmitted to the network-side device based on the transmission configuration information of the Msgl, so as to improve a success rate of transmitting the data payload in the Msg1.

Optionally, the foregoing step 301 of transmitting a data payload in Msgl to a network-side device based on transmission configuration information of the Msgl includes:
when a condition of retransmission is satisfied, retransmitting the data payload in the Msgl to the network-side device based on the transmission configuration information of the Msg1.

The condition of retransmission includes at least one of the following:
content of Msg2 corresponding to the data payload in the Msgl is not received within the time duration of Msg2 reception;
content of Msg2 corresponding to a control payload in the Msgl is not received within the time duration of Msg2 reception; and
the received Msg2 indicates that the Msgl needs to be retransmitted.

In this embodiment of this disclosure, the receiving time range may be a receiving time window of a random access response.

In one implementation, if the terminal device does not receive the content of Msg2 (for example, a contention resolution identifier (that is, Content Resolution ID)) corresponding to the data payload in the Msgl (for example, data in a PUSCH (Physical Uplink Shared Channel, physical uplink shared channel)) within the receiving time range of the Msg2, the data payload in the Msgl may be retransmitted to the network-side device.

In another implementation, if the terminal device does not receive the content of Msg2 (for example, a preamble (that is, Preamble) identifier) corresponding to the control payload in the Msgl (for example, a PRACH (Physical Random Access Channel, physical random access channel) preamble (that is, Preamble)) within the receiving time range of the Msg2, the data payload in the Msgl may be retransmitted to the network-side device.

In another implementation, if the terminal device does not receive the Msg2 corresponding to the Msgl within the receiving time range of the Msg2, that is, receives neither the content of Msg2 corresponding to the data payload in the Msgl nor the content of Msg2 corresponding to the control payload in the Msgl, the data payload in the Msgl may be retransmitted to the network-side device.

In another implementation, if the received Msg2 indicates that the Msgl needs to be retransmitted, the data payload in the Msgl may be retransmitted to the network-side device.

Optionally, if the Msg2 received by the terminal device indicates that the data payload of the Msgl needs to be retransmitted, the terminal device may stop receiving the Msg2, for example, stop an Msg2 receiving timer. In other words, it is considered that transmission of the data payload in the Msgl fails and retransmission of the Msgl is triggered.

It should be noted that the foregoing various implementations may be combined randomly depending on actual situations.

In this embodiment of this disclosure, when the condition of retransmission is satisfied, retransmitting the data payload in the Msgl to the network-side device based on the transmission configuration information of the Msgl can improve a success rate of transmitting the data payload in the Msgl and save transmission resources.

Optionally, the transmitting a data payload in Msgl to a network-side device based on transmission configuration information of a data payload in the Msgl includes:
using first HARQ process data to retransmit the data payload in the Msgl to the network-side device, where the first HARQ process data is the same as the HARQ process data of the data payload in the Msgl, which is transmitted at the first or previous transmission;
   or
using second HARQ process data to retransmit the data payload in the Msgl to the network-side device, where the second HARQ process data is newly generated HARQ process data.

In this embodiment of this disclosure, the HARQ process data may include a size of a transmission block.

In one implementation, when the data payload in the Msgl is retransmitted to the network-side device, the first HARQ process data, namely HARQ process data that is the same as the HARQ process data of the data payload in the Msgl, which is transmitted at the first or previous transmission, may be used to retransmit the data payload in the Msgl to the network-side device, so as to implement combination and decoding.

For example, during retransmission of the Msgl, modulation and coding scheme (for example, BPSK (Binary Phase Shift Keying, binary phase shift keying)) same as that in the previous or first transmission and a resource (for example, RB (Resource Block, resource block) same as that in the previous or first transmission are used to retransmit the Msg1.

It should be noted that when the first HARQ process data is used to retransmit the data payload in the Msgl to the network-side device, HARQ transmission data stored in a HARQ process cache and same as that in the previous or first Msgl transmission may be used to retransmit the data payload of the Msg1. Alternatively, a HARQ process cache corresponding to the Msgl may be cleared, and new HARQ transmission data is generated for transmission. For example, the new HARQ transmission data may be generated based on the data payload in the Msgl stored in the Msgl cache, for Msgl retransmission.

In another implementation, when the data payload in the Msgl is retransmitted to the network-side device, the second HARQ process data, namely the newly generated HARQ process data, may be used to retransmit the data payload in the Msgl to the network-side device. For example, the HARQ process cache corresponding to the Msgl may be cleared, and new HARQ transmission data is generated, and a new modulation and coding mode and a new redundancy version are used for Msgl retransmission.

Optionally, the retransmitting the data payload in the Msgl to the network-side device may include:
retransmitting the data payload in the Msgl to the network-side device based on a transmission resource indicated by first resource information, where the first resource information includes at least one of resource information for Msgl retransmission pre-configured by a network and resource information for Msgl retransmission in Msg2.

In this embodiment of this disclosure, a transmission resource for retransmitting the Msgl may be pre-configured by the network. For example, before the terminal device initiates the two-step random access procedure, the network-side device configures the resource information for Msgl retransmission for the terminal device, so as to indicate the transmission resource for retransmitting the Msg1. Alternatively, the transmission resource for retransmitting the Msgl may be indicated by the Msg2, for example, by using the resource information for Msgl retransmission in the Msg2 to indicate the transmission resources of Msgl retransmission.

In this embodiment of this disclosure, retransmitting the data payload in the Msgl to the network-side device based on a transmission resource indicated by first resource information can improve a success rate of retransmitting the data payload in the Msg1.

Optionally, the resource information for Msgl retransmission includes at least one of the following:
time domain resource information;
frequency domain resource information;
spatial domain resource information;
HARQ configuration information; and
modulation and coding scheme.

In this embodiment of this disclosure, the resource information for Msgl retransmission may be the resource information for Msgl retransmission in the Msg2 or the resource information for Msgl retransmission pre-configured by the network.

The time domain resource information is used to indicate a time domain resource, such as a sub-frame number and a time-slot number. The foregoing frequency domain resource information is used to indicate a frequency domain resource, such as an RB (Resource Block, resource block) number. The spatial domain resource information is used to indicate a spatial domain resource, such as an SSB (Synchronous Signal Block, synchronous signal block) corresponding to uplink grant or a CSI-RS (Channel State Information Reference Signal, channel state information reference signal) identifier. The HARQ configuration information may include at least one of a HARQ process identifier (for example, HARQ Process ID 0) and a HARQ redundancy version identifier (for example, RV1). The modulation and coding mode may include BPSK (Binary Phase Shift Keying, binary phase shift keying) and QPSK (Quadrature Phase Shift Keying, quadrature phase shift keying).

It should be noted that the resource information for Msgl retransmission may be used to indicate one or at least two transmission resources. For example, the resource information for Msgl retransmission may indicate retransmission resources for Msgl retransmission of different terminal devices.

Optionally, the retransmitting the data payload in the Msgl to the network-side device may include:
waiting for a first time after retransmission is triggered, and retransmitting the data payload in the Msgl.

Optionally, a manner of determining the first time (that is, a waiting time) may include any one of the following:
determining the first time based on time information pre-configured on the network side, for example, when a time configured on the network side is 1s, the terminal device randomly selects one time within a time range with a maximum value of 1s as the first time, namely the waiting time; and
determining the first time based on time information indicated by the Msg2, for example, when a time indicated by the Msg2 is 1s, the terminal device may randomly select one time within a time range with a maximum value of 1s as the first time, namely the waiting time.

Optionally, the method further includes:
receiving the Msg2 sent by the network-side device.

The Msg2 includes at least one of the following:
Msgl identification information;
resource information for Msgl retransmission;
Msgl retransmission waiting time information;
an association of the resource information for Msgl retransmission and the terminal device; and
an association of the waiting time information for Msgl retransmission and the terminal device.

In this embodiment of this disclosure, the Msgl identification information includes at least one of a preamble identifier and a terminal device identifier of a data channel. The terminal device identifier of the data channel may be a data identifier of a PUSCH, such as an RA-RNTI (Random Access Radio Network Temporary Identifier, random access radio network temporary identifier).

The resource information for Msgl retransmission may include at least one of the following: time domain resource information; frequency domain resource information; spatial domain resource information; HARQ configuration information; and modulation and coding scheme.

The Msgl retransmission waiting time information is used to indicate an Msgl retransmission waiting time. For example, when a time indicated by the Msg2 is 1s, the terminal device randomly selects one time within a time range with a maximum value of 1s as the waiting time, and may wait for the time after retransmission is triggered, and perform retransmission.

In an actual application, the Msg2 may be sent to a plurality of terminal devices. The resource information for Msgl retransmission in the Msg2 may include resource information for Msgl retransmission for the plurality of terminal devices, and the Msgl retransmission waiting time information in the Msg2 may include Msgl retransmission waiting time information for the plurality of terminal devices.

In order that the terminal device receiving the Msg2 may rapidly obtain resource information for Msgl retransmission and Msgl retransmission waiting time information that are corresponding to the terminal device, an association of the resource information for Msgl retransmission and the terminal device, and an association of the waiting time information for Msgl retransmission and the terminal device may be carried in the Msg2. For example, an association of the resource information for Msgl retransmission and identification information of the terminal device (for example, a preamble identifier or a terminal device identifier of a data channel) may be established, or an association of the waiting time information for Msgl retransmission and identification information of the terminal device may be established, so that the resource information for Msgl retransmission and/or Msgl retransmission waiting time information corresponding to the terminal device can be obtained rapidly based on the correspondence.

Optionally, the terminal device identifier of the data channel is a radio network temporary identifier RNTI obtained through calculation based on the transmission occasion of the Msg1.

For example, the RA-RNTI serves as a data identifier of the PUSCH transmitted in the data payload in the Msg1. It should be noted that when the RNTI is not included in a scrambling code of the PUSCH transmitted in the data payload in the Msgl, the terminal device identifier of the data channel does not include the RNTI.

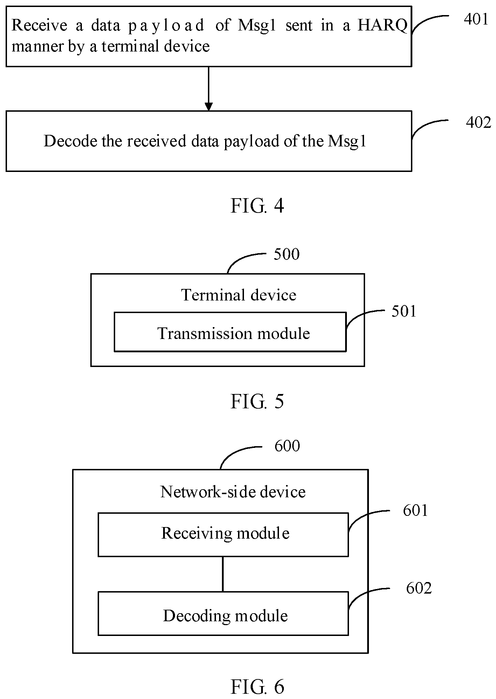

An embodiment of this disclosure further provides a random access method, applied to a network-side device. Referring to FIG. 4, FIG. 4 is a flowchart of another random access method according to an embodiment of this disclosure. As shown in FIG. 4, the following steps are included.

Step 401: Receive a data payload of Msgl sent in a HARQ manner by a terminal device.

In this embodiment of this disclosure, HARQ configuration information may be pre-defined by the protocol or configured on a network side. The HARQ configuration information includes at least one of the following: a HARQ process identifier and a HARQ redundancy version identifier. The data payload of the Msgl may be an RRC message or the like. It should be noted that the Msgl may include a control payload, such as a preamble.

Step 402: Decode the received data payload of the Msgl.

In this embodiment of this disclosure, the data payload of the Msgl sent in the HARQ manner by the terminal device is received and the received data payload of the Msgl is decoded, so as to improve a success rate of transmitting the data payload in the Msgl.

In an actual situation, the network-side device may receive a plurality of Msg1. Optionally, when the network-side device identifies, in the received Msgl, at least two Msgl corresponding to a same data payload, the network-side device may combine and decode data payloads of the at least two Msgl, for example, combine and decode different HARQ transmission data, so as to improve a success rate of decoding the data payload in the Msgl.

It can be understood that if it is determined that the plurality of transmitted Msgl do not correspond to the same data payload, the data payloads of the plurality of Msgl may be independently decoded.

Optionally, when it is determined that at least two Msgl in the received Msgl corresponds to the same data payload, before data payloads of the at least two Msgl are combined and decoded, the method further includes:
determining, in the received Msgl, at least two Msgl with same identification information as the at least two Msgl corresponding to the same data payload; or
determining, in the received Msgl, Msgl retransmitted on a specified transmission resource and Msgl with the same identification information as at the least two Msgl corresponding to the same data payload.

In this embodiment of this disclosure, the at least two Msgl with the same identification information in the received Msgl are determined as the at least two Msgl corresponding to the same data payload. For example, when preamble identifiers (that is, Preamble ID) or terminal device identifiers (that is, UE ID) of the PUSCH obtained by decoding the plurality of Msgl on the network side are the same, the plurality of Msgl with the same preamble identifier or the same terminal device identifier of the PUSCH may be determined as the Msgl corresponding to the same data payload, where the terminal device identifier of the PUSCH may be an RA-RNTI.

In the received Msgl, the Msgl retransmitted on the specified transmission resource and the Msgl with the same identification information are determined as the at least two Msgl corresponding to the same data payload. For example, the network side decodes a preamble identifier (that is, Preamble ID) or a terminal device identifier (that is, UE ID) of a PUSCH from one Msgl, but decodes no content of the data payload. Therefore, the transmission resource for Msgl retransmission of the terminal device is specified by using the preamble identifier or the terminal device identifier of the PUSCH, the network side considers that the data payload received on the specified transmission resource used for Msgl retransmission is the same as a data payload transmitted in the Msg1. To be specific, the plurality of Msgl correspond to transmission of the same data payload.

Optionally, the method further includes:
sending Msg2 to the terminal device.

The Msg2 includes at least one of the following:
Msgl identification information;
resource information for Msgl retransmission;
Msgl retransmission waiting time information;
an association of the resource information for Msgl retransmission and the terminal device; and
an association of the waiting time information for Msgl retransmission and the terminal device.

In this embodiment of this disclosure, the Msgl identification information includes at least one of a preamble identifier and a terminal device identifier of a data channel. The terminal device identifier of the data channel may be a data identifier of a PUSCH, such as an RA-RNTI (Random Access Radio Network Temporary Identifier, random access radio network temporary identifier).

The resource information for Msgl retransmission may include at least one of the following: time domain resource information; frequency domain resource information; spatial domain resource information; HARQ configuration information; and modulation and coding scheme.

The Msgl retransmission waiting time information is used to indicate an Msgl retransmission waiting time. For example, when a time indicated by the Msg2 is 1s, the terminal device randomly selects one time within a time range with a maximum value of 1s as the waiting time, and may wait for the time after retransmission is triggered, and perform retransmission.

In an actual application, the Msg2 may be sent to a plurality of terminal devices, the resource information for Msgl retransmission in the Msg2 may include resource information for Msgl retransmission for the plurality of terminal devices, and the Msgl retransmission waiting time information in the Msg2 may include Msgl retransmission waiting time information for the plurality of terminal devices.

In order that the terminal device receiving the Msg2 may rapidly obtain resource information for Msgl retransmission and Msgl retransmission waiting time information that are corresponding to the terminal device, an association of the resource information for Msgl retransmission and the terminal device, and an association of the waiting time information for Msgl retransmission and the terminal device may be carried in the Msg2. For example, an association of the resource information for Msgl retransmission and identification information of the terminal device (for example, a preamble identifier or a terminal device identifier of a data channel) may be established, or an association of the waiting time information for Msgl retransmission and identification information of the terminal device may be established, so that the resource information for Msgl retransmission and/or Msgl retransmission waiting time information corresponding to the terminal device can be obtained rapidly based on the correspondence.

In the random access method according to this embodiment of this disclosure, for the Msgl, data of the data payload in the Msgl may be stored in a specified Msgl cache, and is transmitted by using a HARQ process. The HARQ process may be independent of a HARQ process for transmitting other uplink data by the terminal device, or may be one of HARQ processes for transmitting other uplink data. Moreover, specified HARQ configuration information (for example, RV0) may be used for initial transmission or retransmission. When the random access procedure is completed, the HARQ cache and the Msgl cache may be cleared. During Msgl retransmission, retransmission may be performed after a period of time based on a BI (Backoff Indicator, backoff indicator) value in the Msg2 elapses.

For the Msg2, the Msg2 may indicate transmission of a specified Msg1. For example, such as decoding a preamble (that is, Preamble) identifier in Msgl or a data channel identifier (for example, a terminal device identifier in PUSCH), yet without decoding the data payload sent in Msg1.a preamble (that is, Preamble) identifier or an identifier of a data channel (for example, a terminal device identifier of the PUSCH) is decoded from one Msgl, but a transmitted data payload is not decoded for the Msg1. For transmission of the specified Msgl, the Msg2 indicates related information of Msgl retransmission. The information may include at least one of the following: a backoff indicator, identification information (for example, a preamble identifier or a terminal device identifier) of the Msgl to be retransmitted, and resource information for Msgl retransmission. It should be noted that resource information for Msgl retransmission may be used to retransmit Msgl of one or more terminal devices, where the resource information for Msgl retransmission may indicate one or more specified transmission resources.

In the random access method according to this embodiment of this disclosure, the Msgl is transmitted in a specififed HARQ manner in the two-step random access (that is, 2-Step RACH) procedure, thereby improving a success rate of Msgl transmission. In addition, Msgl retransmission is indicated by using auxiliary information of the Msg2, thereby improving a success rate of Msgl retransmission. Furthermore, the network side may combine and decode a plurality of Msgl transmitted, thereby improving a success rate of decoding the data payload in the Msgl.

Referring to FIG. 5, FIG. 5 is a structural diagram of a terminal device according to an embodiment of this disclosure. As shown in FIG. 5, the terminal device 500 includes a transmission module 501.

The transmission module 501 is configured to transmit a data payload in Msgl to a network-side device based on transmission configuration information of the Msgl.

Optionally, the transmission module 501 is specifically configured to:
when the transmission configuration information indicates transmitting the data payload in the Msgl via the HARQ manner, use a HARQ manner to transmit the data payload in the Msgl to the network-side device.

Optionally, HARQ configuration information used for transmitting the data payload in the Msgl includes at least one of the following:
a HARQ process identifier; and
a HARQ redundancy version identifier.

Optionally, the transmission module 501 is specifically configured to:
when the transmission configuration information indicates transmitting the data payload in the Msgl without using the HARQ manner, transmit a data payload in the Msgl to the network-side device without HARQ coding.

Optionally, the transmitting a data payload in Msgl to a network-side device is retransmitting the data payload in the Msgl to the network-side device.

Optionally, the transmission module 501 is specifically configured to:
when a condition of retransmission is satisfied, retransmit the data payload in the Msgl to the network-side device based on the transmission configuration information of the Msg1.

The condition of retransmission includes at least one of the following:
content of Msg2 corresponding to the data payload in the Msgl is not received within the time duration of Msg2 reception;
content of Msg2 corresponding to a control payload in the Msgl is not received within the time duration of Msg2 reception; and
the received Msg2 indicates that the Msgl needs to be retransmitted.

Optionally, the transmission module 501 is specifically configured to:
use first HARQ process data to retransmit the data payload in the Msgl to the network-side device, where the first HARQ process data is the same as the HARQ process data of the data payload in the Msgl, which is transmitted at the first or previous transmission;
   or
use second HARQ process data to retransmit the data payload in the Msgl to the network-side device, where the second HARQ process data is newly generated HARQ process data.

Optionally, the transmission module 501 is specifically configured to:
retransmit the data payload in the Msgl to the network-side device based on a transmission resource indicated by first resource information, where the first resource information includes at least one of resource information for Msgl retransmission pre-configured by a network and resource information for Msgl retransmission in Msg2.

Optionally, the resource information for Msgl retransmission includes at least one of the following:
time domain resource information;
frequency domain resource information;
spatial domain resource information;
HARQ configuration information; and
modulation and coding scheme.

Optionally, the terminal device further includes:
a receiving module, configured to receive Msg2 sent by the network-side device.

The Msg2 includes at least one of the following:
Msgl identification information;
resource information for Msgl retransmission;
Msgl retransmission waiting time information;
an association of the resource information for Msgl retransmission and the terminal device; and
an association of the waiting time information for Msgl retransmission and the terminal device.

Optionally, the Msgl identification information includes at least one of a preamble identifier and a terminal device identifier of a data channel.

Optionally, the terminal device identifier of the data channel is a radio network temporary identifier RNTI obtained through calculation based on the transmission occasion of the Msg1.

The terminal device 500 provided in this embodiment of this disclosure can implement processes performed by the terminal device in the foregoing method embodiments. To avoid repetition, details are not described herein again.

In the terminal device 500 in this embodiment of this disclosure, the transmission module 501 is configured to transmit the data payload in the Msgl to the network-side device based on the transmission configuration information of the Msgl, so as to transmit the data payload in the Msgl in the two-step random access procedure, thereby standardizing an Msgl transmission mode in the two-step random access procedure and providing a solution on Msgl transmission in the two-step random access procedure.

Referring to FIG. 6, FIG. 6 is a structural diagram of a network-side device according to an embodiment of this disclosure. As shown in FIG. 6, the network-side device 600 includes a receiving module 601 and a decoding module 602.

The receiving module 601 is configured to receive a data payload of Msgl sent in a HARQ manner by a terminal device.

The decoding module 602 is configured to decode the received data payload of the Msgl.

Optionally, the network-side device 600 further includes:
a sending module, configured to send Msg2 to the terminal device.

The Msg2 includes at least one of the following:
Msgl identification information;
resource information for Msgl retransmission;
Msgl retransmission waiting time information;
an association of the resource information for Msgl retransmission and the terminal device; and
an association of the waiting time information for Msgl retransmission and the terminal device.

Optionally, the Msgl identification information includes at least one of a preamble identifier and a terminal device identifier of a data channel.

The network-side device 600 provided in this embodiment of this disclosure can implement processes performed by the network-side device in the foregoing method embodiments. To avoid repetition, details are not described herein again.

In the network-side device 600 in this embodiment of this disclosure, the receiving module 601 is configured to receive the data payload in the Msgl sent in the HARQ manner by the terminal device; and the decoding module 602 is configured to decode the received data payload of the Msgl, thereby improving a success rate of transmitting the data payload of the Msg1.

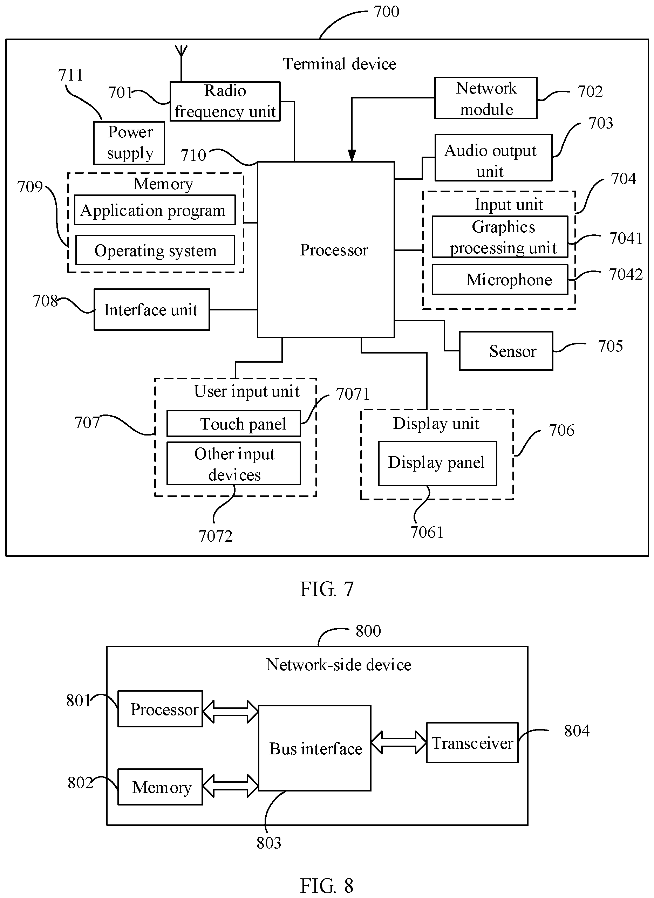

FIG 7 is a structural diagram of another terminal device according to an embodiment of this disclosure. Referring to FIG. 7, the terminal device 700 includes, but is not limited to, a radio frequency unit 701, a network module 702, an audio output unit 703, an input unit 704, a sensor 705, a display unit 706, a user input unit 707, an interface unit 708, a memory 709, a processor 710, a power supply 711, or the like. A person skilled in the art may understand that a terminal device structure shown in FIG. 7 does not constitute any limitation to the terminal device, and the terminal device may include more or fewer components than those shown in the figure, or some components may be combined, or there may be a different component layout. In an embodiment of this disclosure, the terminal device includes but is not limited to a mobile phone, a tablet computer, a notebook computer, a palmtop computer, an in-vehicle terminal, a wearable device, a pedometer, and the like.

The processor 710 is configured to transmit a data payload in Msgl to a network-side device based on transmission configuration information of the Msg1.

In this embodiment of this disclosure, the data payload in the Msgl is transmitted to the network-side device based on the transmission configuration information of the Msgl, so as to transmit the data payload in the Msgl in the two-step random access procedure, thereby standardizing an Msgl transmission mode in the two-step random access procedure and providing a solution on Msgl transmission in the two-step random access procedure.

Optionally, the processor 710 is further configured to:
when the transmission configuration information indicates transmitting the data payload in the Msgl via the HARQ manner, transmit the data payload in the Msgl to the network-side device via the HARQ manner.

Optionally, HARQ configuration information used for transmitting the data payload in the Msgl includes at least one of the following:
a HARQ process identifier; and
a HARQ redundancy version identifier.

Optionally, the processor 710 is further configured to:
when the transmission configuration information indicates transmitting the data payload in the Msgl without using the HARQ manner, transmit a data payload in the Msgl to the network-side device without HARQ coding.

Optionally, the transmitting a data payload in Msgl to a network-side device is retransmitting the data payload in the Msgl to the network-side device.

Optionally, the processor 710 is further configured to:
when a condition of retransmission is satisfied, retransmit the data payload in the Msgl to the network-side device based on the transmission configuration information of the Msg1.

The condition of retransmission includes at least one of the following:
content of Msg2 corresponding to the data payload in the Msgl is not received within the time duration of Msg2 reception;
content of Msg2 corresponding to a control payload in the Msgl is not received within the time duration of Msg2 reception; and
the received Msg2 indicates that the Msgl needs to be retransmitted.

Optionally, the processor 710 is further configured to:
use first HARQ process data to retransmit the data payload in the Msgl to the network-side device, where the first HARQ process data is the same as the HARQ process data of the data payload in the Msgl, which is transmitted at the first or previous transmission;
   or
use second HARQ process data to retransmit the data payload in the Msgl to the network-side device, where the second HARQ process data is newly generated HARQ process data.

Optionally, the processor 710 is further configured to:
retransmit the data payload in the Msgl to the network-side device based on a transmission resource indicated by first resource information, where the first resource information includes at least one of resource information for Msgl retransmission pre-configured by a network and resource information for Msgl retransmission in Msg2.

Optionally, the resource information for Msgl retransmission includes at least one of the following:
time domain resource information;
frequency domain resource information;
spatial domain resource information;
HARQ configuration information; and
modulation and coding scheme.

Optionally, the processor 710 is further configured to:
receive Msg2 sent by the network-side device.

The Msg2 includes at least one of the following:
Msgl identification information;
resource information for Msgl retransmission;
Msgl retransmission waiting time information;
an association of the resource information for Msgl retransmission and the terminal device; and
an association of the waiting time information for Msgl retransmission and the terminal device.

Optionally, the Msgl identification information includes at least one of a preamble identifier and a terminal device identifier of a data channel.

Optionally, the terminal device identifier of the data channel is a radio network temporary identifier RNTI obtained through calculation based on the transmission occasion of the Msg1.

It should be understood that in an embodiment of this disclosure, the radio frequency unit 701 may be configured to: receive and send signals in an information receiving/sending process or a call process; and specifically, after receiving downlink data from a base station, send the downlink information to the processor 710 for processing, and in addition, send uplink data to the base station. Generally, the radio frequency unit 701 includes but is not limited to an antenna, at least one amplifier, a transceiver, a coupler, a low noise amplifier, a duplexer, and the like. In addition, the radio frequency unit 701 may further communicate with a network and another device through a wireless communications system.

The terminal device provides a user with wireless broadband internet access through the network module 702, for example, helping the user to send or receive an e-mail, to browse a web page, or to access streaming media.

The audio output unit 703 may convert audio data received by the radio frequency unit 701 or the network module 702 or stored in the memory 709 into an audio signal and output the audio signal as a sound. Furthermore, the audio output unit 703 may also provide audio output (for example, a call signal received sound or a message received sound) related to a specific function performed by the mobile terminal 700. The audio output unit 703 includes a speaker, a buzzer, a phone receiver, and the like.

The input unit 704 is configured to receive an audio or video signal. The input unit 704 may include a graphics processing unit (Graphics Processing Unit, GPU) 7041 and a microphone 7042, and the graphics processing unit 7041 processes image data of a still picture or a video obtained by an image capture apparatus (for example, a camera) in an image capture mode or a video capture mode. A processed image frame may be displayed on the display unit 706. An image frame processed by the graphics processing unit 7041 may be stored in the memory 709 (or another storage medium) or sent by the radio frequency unit 701 or the network module 702. The microphone 7042 can receive a sound and can process the sound into audio data. The processed audio data can be converted into a format that can be sent to a mobile communication base station through the radio frequency unit 701 in a telephone call mode, for outputting.

The terminal device 700 further includes at least one sensor 705, for example, an optical sensor, a motion sensor, and other sensors. Specifically, the optical sensor includes an ambient light sensor and a proximity sensor, where the ambient light sensor may adjust luminance of a display panel 7061 based on brightness of ambient light, and the proximity sensor may turn off the display panel 7061 and/or backlight when the terminal device 700 moves to an ear. As a type of motion sensor, an accelerometer sensor may detect acceleration magnitudes in all directions (generally three axes), and when the accelerometer sensor is stationary, may detect a magnitude and a direction of gravity, and may be configured to recognize a posture of the terminal device (such as switching between landscape and portrait, related games, and magnetometer posture calibration), vibration recognition related functions (such as a pedometer and stroke), and the like. The sensor 705 may further include a fingerprint sensor, a pressure sensor, an iris sensor, a molecular sensor, a gyroscope, a barometer, a hygrometer, a thermometer, an infrared sensor, and the like. Details are not described herein.

The display unit 706 is configured to display information input by the user or information provided for the user. The display unit 706 may include a display panel 7061, and the display panel 7061 may be configured in the form of a liquid crystal display (Liquid Crystal Display, LCD), an organic light-emitting diode (Organic Light-Emitting Diode, OLED), or the like.

The user input unit 707 may be configured to receive input digit or character information, and generate a key signal input related to a user setting and function control of the terminal device. Specifically, the user input unit 707 includes a touch panel 7071 and other input devices 7072. The touch panel 7071 is also referred to as a touchscreen, and may collect a touch operation of the user on or near the touch panel (for example, an operation performed on or near the touch panel 7071 by the user by using any appropriate object or accessory such as a finger or a stylus). The touch panel 7071 may include two parts: a touch detection apparatus and a touch controller. The touch detection apparatus detects a touch direction of the user, detects a signal carried by a touch operation, and transmits the signal to the touch controller. The touch controller receives touch information from the touch detection apparatus, converts the touch information to point coordinates, and sends the point coordinates to the processor 710, and receives and executes a command sent by the processor 710. In addition, the touch panel 7071 may be implemented in a plurality of forms, for example, as a resistive, capacitive, infrared, or surface acoustic wave touch panel. The user input unit 707 may further include other input devices 7072 in addition to the touch panel 7071. Specifically, the other input devices 7072 may include but are not limited to a physical keyboard, a function key (such as a volume control key or a power on/off key), a trackball, a mouse, a joystick, and the like. Details are not described herein.

Further, the touch panel 7071 may cover the display panel 7061. When detecting a touch operation on or near the touch panel 7071, the touch panel 7071 transmits the touch operation to the processor 710 to determine a type of a touch event. Then, the processor 710 provides a corresponding visual output on the display panel 7061 based on the type of the touch event. Although the touch panel 7071 and the display panel 7061 are used as two independent components to implement input and output functions of the terminal device in FIG. 7, the touch panel 7071 and the display panel 7061 may be integrated to implement the input and output functions of the terminal device in some embodiments. This is not specifically limited herein.

The interface unit 708 is an interface for connecting an external apparatus to the terminal device 700. For example, the external apparatus may include a wired or wireless headphone port, an external power (or battery charger) port, a wired or wireless data port, a memory card port, a port for connecting an apparatus having an identification module, an audio input/output (I/O) port, a video I/O port, an earphone port, and the like. The interface unit 708 may be configured to receive an input (for example, data information or power) from an external apparatus, and transmit the received input to one or more components in the terminal device 700, or may be configured to transmit data between the terminal device 700 device and an external apparatus.

The memory 709 may be configured to store a software program and various data. The memory 709 may mainly include a program storage area and a data storage area, where the program storage area may store an operating system, an application program required for at least one function (such as a sound play function and an image play function), and the like; and the data storage area may store data (such as audio data and a phone book) created based on use of a mobile phone, and the like. In addition, the memory 709 may include a high-speed random access memory, or may include a non-volatile memory, for example, at least one magnetic disk storage device, a flash memory device, or other volatile solid-state storage devices.

The processor 710 is a control center of the terminal device. The processor 710 uses various interfaces and lines to connect all parts of the entire terminal device, and performs various functions and data processing of the terminal device by running or executing the software program and/or module stored in the memory 709 and invoking data stored in the memory 709, thereby performing overall monitoring on the terminal device. The processor 710 may include one or more processing units. Optionally, the processor 710 may integrate an application processor and a modem processor, where the application processor mainly processes an operating system, a user interface, an application program, and the like; and the modem processor mainly processes wireless communication. It can be understood that the modem processor may alternatively not be integrated into the processor 710.

The terminal device 700 may further include a power supply 711 (for example, a battery) that supplies power to each component. Optionally, the power supply 711 may be logically connected to the processor 710 by using a power management system, so as to implement functions such as charging management, discharging management, and power consumption management by using the power management system.

In addition, the terminal device 700 includes some functional modules that are not illustrated. Details are not described herein.

Optionally, an embodiment of this disclosure further provides a terminal device, including a processor 710, a memory 709, and a computer program stored in the memory 709 and capable of running on the processor 710. When the computer program is executed by the processor 710, the processes of the random access method embodiment are implemented, with the same technical effect achieved. To avoid repetition, details are not described herein again.

Referring to FIG. 8, FIG. 8 is a structural diagram of another network-side device according to an embodiment of this disclosure. The network-side device may be a source node or a target node. As shown in FIG. 8, the network-side device 800 includes a processor 801, a memory 802, a bus interface 803, and a transceiver 804, where the processor 801, the memory 802, and the transceiver 804 are all connected to the bus interface 803.

In this embodiment of this disclosure, the network-side device 800 further includes a computer program stored in the memory 802 and capable of running on the processor 801. When the computer program is executed by the processor 801, the following steps are implemented:
receiving a data payload of Msgl sent in a HARQ manner by a terminal device; and
decoding the received data payload of the Msg1.

Optionally, when the computer program is executed by the processor 801, the following steps may be further implemented:
sending Msg2 to the terminal device.

The Msg2 includes at least one of the following:
Msgl identification information;
resource information for Msgl retransmission;
Msgl retransmission waiting time information;
an association of the resource information for Msgl retransmission and the terminal device; and
an association of the waiting time information for Msgl retransmission and the terminal device.

Optionally, the Msgl identification information includes at least one of a preamble identifier and a terminal device identifier of a data channel.

Optionally, an embodiment of this disclosure further provides a network-side device, including a processor 801, a memory 808, and a computer program stored in the memory 802 and capable of running on the processor 801. When the computer program is executed by the processor 801, processes of the foregoing random access method embodiment can be implemented, with the same technical effect achieved. To avoid repetition, details are not described herein again.

An embodiment of this disclosure further provides a computer readable storage medium, where a computer program is stored in the computer readable storage medium. When the computer program is executed by a processor, processes of the foregoing random access method embodiment can be implemented, with the same technical effect achieved. To avoid repetition, details are not described herein again. For example, the computer-readable storage medium is a read-only memory (Read-Only Memory, ROM), a random access memory (Random Access Memory, RAM), a magnetic disk, or an optical disc.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude existence of other identical elements in the process, method, article, or apparatus that includes the element.

According to the description of the foregoing implementations, a person skilled in the art can clearly understand that the methods in the foregoing embodiments may be implemented by software on a necessary universal hardware platform or by hardware only. In most cases, the former is a more preferred implementation. Based on such an understanding, the technical solutions of this disclosure essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network-side device, or the like) to perform the methods described in the embodiments of this disclosure.

The embodiments of this disclosure are described above with reference to the accompanying drawings, but this disclosure is not limited to the embodiments. The embodiments are only illustrative rather than restrictive. Inspired by this disclosure, a person of ordinary skill in the art can still derive a plurality of variations without departing from the essence of this disclosure and the protection scope of the claims. All these variations shall fall within the protection of this disclosure.

## Claims

1. A random access method, applied to a terminal device, wherein the random access method comprises:
transmitting a data payload in Msgl to a network-side device based on transmission configuration information of the Msg1.

2. The method according to claim 1, wherein the transmitting a data payload in Msgl to a network-side device based on transmission configuration information of the Msgl comprises:
when the transmission configuration information indicates transmitting the data payload in the Msgl via the HARQ manner, transmitting the data payload in the Msgl to the network-side device via the HARQ manner.

3. The method according to claim 2, wherein HARQ configuration information used for transmitting the data payload in the Msgl comprises at least one of the following:
a HARQ process identifier; and
a HARQ redundancy version identifier.

4. The method according to claim 1, wherein the transmitting a data payload in Msgl to a network-side device based on transmission configuration information of the Msgl comprises:
when the transmission configuration information indicates transmitting the data payload in the Msgl without using the HARQ manner, transmitting a data payload in the Msgl to the network-side device without HARQ coding.

5. The method according to claim 1, wherein the transmitting a data payload in Msgl to a network-side device is retransmitting the data payload in the Msgl to the network-side device.

6. The method according to claim 5, wherein the transmitting a data payload in Msgl to a network-side device based on transmission configuration information of the Msgl comprises:
when a condition of retransmission is satisfied, retransmitting the data payload in the Msgl to the network-side device based on the transmission configuration information of the Msgl, wherein
the condition of retransmission comprises at least one of the following:
content of Msg2 corresponding to the data payload in the Msgl is not received within the time duration of Msg2 reception;
content of Msg2 corresponding to a control payload in the Msgl is not received within the time duration of Msg2 reception;
the received Msg2 indicates that the Msgl needs to be retransmitted.

7. The method according to claim 5, wherein the transmitting a data payload in Msgl to a network-side device based on transmission configuration information of a data payload in the Msgl comprises:
using first data to retransmit the data payload in the Msgl to the network device, wherein the first data is the same as the data of the data payload in the Msgl, which is transmitted at the first or previous transmission;
or
using second data to retransmit the data payload in the Msgl to the network-side device, wherein the second data is newly generated data.

8. The method according to claim 5, wherein the retransmitting the data payload in the Msgl to the network-side device comprises:
retransmitting the data payload in the Msgl to the network-side device based on a transmission resource indicated by first resource information, wherein the first resource information comprises at least one of resource information for Msgl retransmission pre-configured by a network and resource information for Msgl retransmission in Msg2.

9. The method according to claim 8, wherein the resource information for Msgl retransmission comprises at least one of the following:
time domain resource information;
frequency domain resource information;
spatial domain resource information;
HARQ configuration information; and
modulation and coding scheme.

10. The method according to claim 1, further comprising:
receiving Msg2 sent by the network-side device, wherein
the Msg2 comprises at least one of the following:
Msgl identification information;
resource information for Msgl retransmission;
waiting time information for Msgl retransmission;
an association of the resource information for Msgl retransmission and the terminal device; and
an association of the waiting time information for Msgl retransmission and the terminal device.

11. The method according to claim 10, wherein the Msgl identification information comprises at least one of a preamble identifier and a terminal device identifier of a data channel.

12. The method according to claim 11, wherein the terminal device identifier of the data channel is a radio network temporary identifier RNTI obtained through calculation based on the transmission occasion of the Msg1.

13. A random access method, applied to a network-side device, wherein the random access method comprises:
receiving a data payload of Msgl sent in a HARQ manner by a terminal device; and
decoding the received data payload of the Msg1.

14. The method according to claim 13, further comprising:
sending Msg2 to the terminal device, wherein
the Msg2 comprises at least one of the following:
Msgl identification information;
resource information for Msgl retransmission;
Msgl retransmission waiting time information;
an association of the resource information for Msgl retransmission and the terminal device; and
an association of the waiting time information for Msgl retransmission and the terminal device.

15. The method according to claim 14, wherein the Msgl identification information comprises at least one of a preamble identifier and a terminal device identifier of a data channel.

16. A terminal device, comprising:
a transmission module, configured to transmit a data payload in Msgl to a network-side device based on transmission configuration information of the Msg1.

17. The terminal device according to claim 16, wherein the transmission module is specifically configured to:
when the transmission configuration information indicates transmitting the data payload in the Msgl via the HARQ manner, transmit the data payload in the Msgl to the network-side device via the HARQ manner.

18. The terminal device according to claim 17, wherein HARQ configuration information used for transmitting the data payload in the Msgl comprises at least one of the following:
a HARQ process identifier; and
a HARQ redundancy version identifier.

19. The terminal device according to claim 16, wherein the transmission module is specifically configured to:
when the transmission configuration information indicates transmitting the data payload in the Msgl without using the HARQ manner, transmit a data payload in the Msgl to the network-side device without HARQ coding.

20. The terminal device according to claim 16, wherein the transmitting a data payload in Msgl to a network-side device is retransmitting the data payload in the Msgl to the network-side device.

21. The terminal device according to claim 20, wherein the transmission module is specifically configured to:
when a condition of retransmission is satisfied, retransmit the data payload in the Msgl to the network-side device based on the transmission configuration information of the Msgl, wherein
the condition of retransmission comprises at least one of the following:
content of Msg2 corresponding to the data payload in the Msgl is not received within the time duration of Msg2 reception;
content of Msg2 corresponding to a control payload in the Msgl is not received within the time duration of Msg2 reception; and
the received Msg2 indicates that the Msgl needs to be retransmitted.

22. The terminal device according to claim 20, wherein the transmission module is specifically configured to:
use first data to retransmit the data payload in the Msgl to the network-side device, wherein the first data is the same as the data of the data payload in the Msgl, which is transmitted at the first or previous transmission;
or
use second data to retransmit the data payload in the Msgl to the network-side device, wherein the second data is newly generated data.

23. The terminal device according to claim 20, wherein the transmission module is specifically configured to:
retransmit the data payload in the Msgl to the network-side device based on a transmission resource indicated by first resource information, wherein the first resource information comprises at least one of resource information for Msgl retransmission pre-configured by a network and resource information for Msgl retransmission in Msg2.

24. The terminal device according to claim 23, wherein the resource information for Msgl retransmission comprises at least one of the following:
time domain resource information;
frequency domain resource information;
spatial domain resource information;
HARQ configuration information; and
modulation and coding scheme.

25. The terminal device according to claim 16, further comprising:
a receiving module, configured to receive Msg2 sent by the network-side device, wherein
the Msg2 comprises at least one of the following:
Msgl identification information;
resource information for Msgl retransmission;
Msgl retransmission waiting time information;
an association of the resource information for Msgl retransmission and the terminal device; and
an association of the waiting time information for Msgl retransmission and the terminal device.

26. The terminal device according to claim 25, wherein the Msgl identification information comprises at least one of a preamble identifier and a terminal device identifier of a data channel.

27. The terminal device according to claim 26, wherein the terminal device identifier of the data channel is a radio network temporary identifier RNTI obtained through calculation based on the transmission occasion of the Msg1.

28. A network-side device, comprising:
a receiving module, configured to receive a data payload of Msgl sent in a HARQ manner by a terminal device; and
a decoding module, configured to decode the received data payload of the Msgl.

29. The network-side device according to claim 28, further comprising:
a sending module, configured to send Msg2 to the terminal device, wherein
the Msg2 comprises at least one of the following:
Msgl identification information;
resource information for Msgl retransmission;
Msgl retransmission waiting time information;
an association of the resource information for Msgl retransmission and the terminal device; and
an association of the waiting time information for Msgl retransmission and the terminal device.

30. The network-side device according to claim 28, wherein the Msgl identification information comprises at least one of a preamble identifier and a terminal device identifier of a data channel.

31. A terminal device, comprising a processor, a memory, and a computer program stored in the memory and capable of running on the processor, wherein when the computer program is executed by the processor, the steps of the random access method according to any one of claims 1 to 12 are implemented.

32. A network-side device, comprising a processor, a memory, and a computer program stored in the memory and capable of running on the processor, wherein when the computer program is executed by the processor, the steps of the random access method according to any one of claims 13 to 15 are implemented.

33. A computer-readable storage medium, wherein the computer-readable storage medium stores a computer program, and when the computer program is executed by a processor, the steps of the random access method according to any one of claims 1 to 12 are implemented or the steps of the random access method according to any one of claims 13 to 15 are implemented.
